(19) **Europäisches Patentamt**

**European Patent Office**

**Office européen des brevets**

(11) **EP 0 917 335 B1**

(12) **EUROPEAN PATENT SPECIFICATION**

(45) Date of publication and mention
of the grant of the patent:
**02.01.2002 Bulletin 2002/01**

(51) Int Cl.⁷: **H04M 3/50**, H04M 3/38

(21) Application number: **99101809.4**

(22) Date of filing: **08.07.1986**

(54) **Operations control**

Operationssteuerung

Commande d'opérations

(84) Designated Contracting States:
**DE FR GB NL SE**

(30) Priority: **10.07.1985 US 753299**

(43) Date of publication of application:
**19.05.1999 Bulletin 1999/20**

(60) Divisional application:
**01114139.7 / 1 148 699**

(62) Document number(s) of the earlier application(s) in
accordance with Art. 76 EPC:
**93110671.0 / 0 568 114**
**86904668.0 / 0 229 170**

(73) Proprietor: **Ronald A. Katz Technology Licensing,
L.P., a California limited partnership**
**Los Angeles, California 90069 (US)**

(72) Inventor: **Katz, Ronald Alan**
**Los Angeles, California 90024 (US)**

(74) Representative: **Klunker . Schmitt-Nilson . Hirsch**
**Winzererstrasse 106**
**80797 München (DE)**

(56) References cited:
**EP-A- 0 032 410**        **US-A- 4 071 698**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

This invention relates to operations control and is concerned with methods and systems for exercising such control.

The invention in one aspect is concerned especially with methods of operations control of an interface with a telephone communications facility, of a kind in which calls from a multiplicity of terminals of the communications facility are received at the interface, automated voice response to each call is made to the calling terminal prompting the caller to transmit digital-signal data to the interface via the communications facility, digital-signal data transmitted via the communications facility by the caller in response to the prompting is received at the interface for processing, and a test is carried out to check whether the caller is entitled within a limitation to access operations of the interface.

A method of this specified kind, and a corresponding system, are already known from US-A-4 071 698 in the context of a marketing operation conducted over the public telephone network. In such operation, calling customers individually request that a selected audio recording, which may itself be one of the products marketed or may simply be representative of a service or other product offered, is played to him/her over the telephone line for demonstration or other presentational purposes, before an order is placed by the customer. When the customer calls, a check is made to determine whether this is the first time he/she has called and if not whether the rate at which he/she has made calls without placing an order exceeds a limit established by a 'free-loader' algorithm. If the call is the first call, or the rate-limit has not been exceeded in relation to time or purchases, the caller is prompted by automated voice messages that lead him/her step by step through successive stages of data entry in automatic, computer processing of the call.

In the stage-by-stage processing of the call, the caller is instructed to key in through operation of the pushbuttons of his/her telephone instrument, data concerning his/her account, and then, once this account information has been verified, is invited to key in a code identifying the selection of product or service for which audio demonstration or other presentation is required. Following the presentation, the customer receives automated instructions for keying in data for ordering the relevant product or service. The data keyed in by the customer is recorded in order to maintain inventory records and for the purpose of determining trends, and also for maintaining an historical record in relation to each customer from which, for example, the customer's preferences can be determined.

It is an object of the present invention to provide a method and system of the said specified kind, that offers improvement over what is known from US-A-4 071 698 for, in particular, fuller data-analysis of calls.

According to one aspect of the present invention, a method of operations control of an interface with a telephone communications facility, is characterised in that the test checks whether the caller is entitled to access operations of the interface based on entitlement key-codes allocated to products and/or services associated with those operations, that limits on use of the operations by the individual callers are specified by the entitlement key-codes, and that the digital-signal data received from the individual callers include entitlement key-codes that are checked in the test to qualify the callers for entitlement to access the respective operations.

Other aspects and features of the present invention are set out in the Claims.

The present invention offers advantages over what is known from US-A-4 071 698, and also over methods and systems of telephone marketing using automated voice response as used for hotel or hospital room reservation and railway, air or other ticket reservation, as known from a paper 'Trends and Applications of Voice Output Devices' by Satoshi Aso, J.E.E. Journal of Electronic Engineering, Volume 19, No 182, February 1982, Tokyo, Japan, pages 102-107. This paper also describes a telephone betting method and system in which automated voice response leads a user through a sequence of operations of the push-button keys of his/her telephone to place a bet. Furthermore, a method and system for entering a stake once per week in a lottery, using the public telephone network and involving storage of data concerning each caller and entry of data by him/her in accordance with automated voice instructions, is described in EP-A-0032410.

An example of a system, and its method of operation, in accordance with the present invention, will now be described, with reference to the accompanying drawings, in which:

FIGURE 1 is a block diagram of a system in accordance with the present invention;

FIGURE 2 is a fragmentary diagrammatic representation of a storage cell of the system of FIGURE 1; and

FIGURE 3 is a flow diagram of an operational format of the system of FIGURE 1.

It is to be understood that the specific structural and functional details of the system and method to be described, are merely representative of one of many possible ways in which the present invention may be implemented.

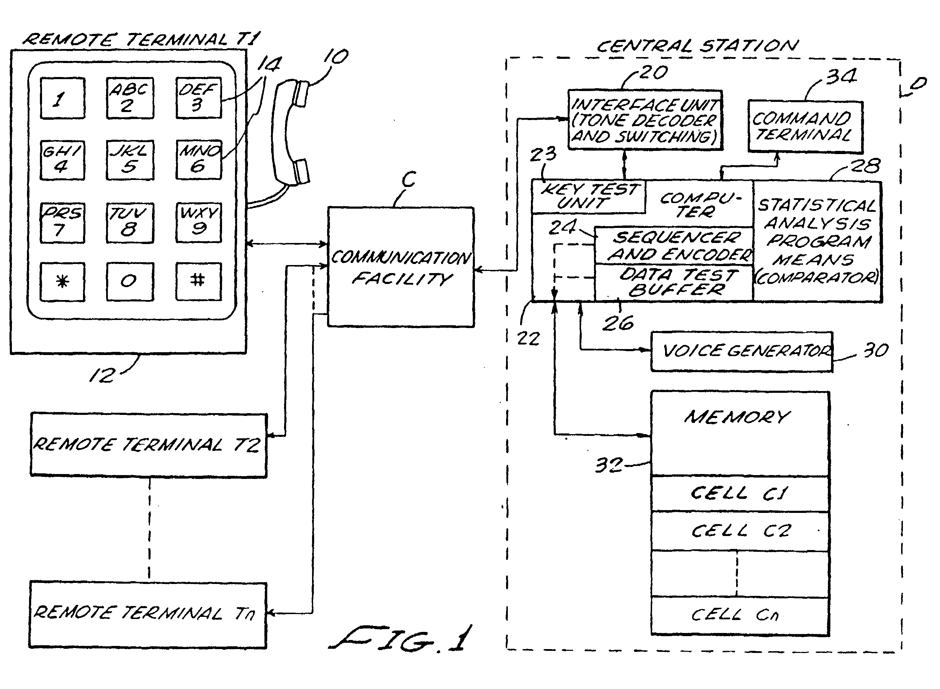

Referring initially to FIGURE 1, a series of remote terminals T1 through Tn are represented. The terminals are generally similar, and accordingly, only the terminal T1 is illustrated in detail. In the disclosed embodiment, the remote terminals T1 through Tn comprise telephone terminals coupled to a communication facility C which may take the form of a comprehensive telephone system for interconnecting any associated terminals. The communication facility C is also coupled to a data development station D in accordance herewith, which is illustrated in some detail.

Generally in accordance with the present development, individual callers use the individual telephone stations T1 through Tn to interface the data development station D through the communication facility C. Also in accordance herewith, the data of individual callers is collected and correlated in the data station D for processing in accordance with external data. As a consequence, a select subset of the callers are isolated and specifically identified.

Several polling (in the sense, for example, of registering responses to a survey invitation) or informing operations can be performed utilizing systems in accordance herewith. For example, a poll of the public might be taken with regard to locating the specific purchasers of a defective and dangerous product.

The public might in this context be polled with the objective of locating persons susceptible to a specific ailment of disease. In a less serious vein, but one of particular commercial significance, the system also might be employed in various public communication game formats or, where legal and deemed in the public welfare, public lotteries.

Considering the system of FIGURE 1 in somewhat greater detail, it is to be understood that the communication facility C has multiplexing capability for individually coupling the terminals T1-Tn to the central station D on request. In the illustrative form of the system, the communication facility C comprises a public telephone facility and the individual terminals T1-Tn take various forms of existing telephone instruments. In that regard, the telephone terminal T1 is represented in some detail to include a hand piece 10 (microphone and earphone) and a panel 12 provided with a rectangular array of push buttons 14.

In accordance with conventional telephone designations, alphabetic and numeric designations are provided on the buttons 14. For example, several of the buttons 14 carry three letters along with a decimal numeral. More specifically, the button designated with the numeral "2" also carries the letters "A", "B", and "C". In that manner, the buttons 14 encompass the numerals "0-9", two symbols, and the alphabet except for the letters "Q" and "Z". Consequently, the buttons 14 accommodate entry of decimal data along with a wide range of alphabetic data. In that regard, the buttons 14 designated with symbols "*" and "#" as well as the numeral "0" can be used by predetermined assignment to represent the letters "Q" and "Z" or any of a variety of other data or commands. Generally in accordance herewith, the buttons 14 are employed to formulate digital data at the central station D in various formats determined by the current specific use of the system.

Considering the central station D in somewhat greater detail, the communication facility C is coupled to an interface unit 20 which incorporates modems, tone decoders, and switching mechanisms. The interface unit 20 affords couplings to a computer 22 which may take the form of a mini-unit programmed for example in accordance with the functions as set forth below. Generally, the computer 22 performs distinct and separate operations. Specifically, the computer 22 may initially qualify a caller. In that regard, if a select group of callers are to have access to the system, a key test unit 23 qualifies individual callers who present a key number. Subsequently, during a data acquisition phase, the computer 22 receives data from individual stations T1-Tn (through the communication facility C) which data is organized, identified, and stored. Thereafter, during a processing phase the computer 22 processes the stored data applying additional data to isolate a select subset of callers.

Sub-blocks in addition to unit 23 also are illustrated in the block designating the computer 22 so as to represent various internal component operating units. In formulating the data records to be stored, the computer 22 employs logic operations which are performed by a sequencer and encoder 24. During statistical processing operations, the computer 22 utilizes a data test buffer 26 along with a statistical analysis program means 28. Exemplary operations and formats for these elements are treated below.

The computer 22 is connected to a voice generator 30 to selectively provide voice messages through the interface unit 20 and the communication facility C to a currently active remote terminal. Also, the computer 22 is coupled to a memory 32 containing a plurality of individual cells C1-Cn which are employed to register the data from individual callers at the terminals. Thus, during a data accumulation phase, the apparatus at the central station D acquires data in the memory 32 utilizing individual cells C1-Cn for the individual callers. Subsequently, during the statistical processing operation, the computer 22 receives data through a command terminal 34 which is tested with regard to the acquired data in the cells C1-Cn of memory 32 so as to select and identify a subset of the individual callers. Thus, the system is effective for use in statistical polling to selectively identify a particular subset of data associated with a subset of individual callers. In that regard, it is important to positively identify the isolated subset of callers and also to enable those callers to verify their identity. The system of the present invention accommodates those needs.

An appreciation of the philosophical operation of a system in accordance with the present invention may now be enhanced by considering an exemplary operation of the illustrative embodiment of FIGURE 1 to isolate a subset of people who are susceptible to a particular disease or infirmity. The exemplary operation might involve a geographical area, as a large city, in which a particular health problem is somewhat acute. For example, a major population centre in which coronary artery disease is a major problem might be polled.

Accordingly, persons most susceptible to such disease could be identified for corrective measures.

As an alternative example related to health, the system may process the resultant data from test kits. Specifically, test kits might be sold to concerned persons who would use the kit to obtain certain specific health data. For example, a person might purchase a kit containing the apparatus and instructions to perform various non-invasive procedures to obtain data that could indicate a health condition, e.g. pregnancy. The kit containing the apparatus could also include a key number for qualifying the purchaser to access the computer 22. The qualification would be performed by the key test unit 23 which might simply incorporate a look-up table to check off key numbers as they are used or "consumed".

Returning to the example mentioned above of a general polling for a population centre, people of the metropolitan area would be informed of the availability of a service for statistical health analysis. Accordingly, persons interested in their individual statistical situation would be motivated to utilize the service. Specifically, individual callers would use the remote terminals T1-Tn to contact the central station D through the communication facility C and thereby provide personal information which would enable a statistical analysis in relation to existing data so as to isolate and inform those persons statistically most likely to be in need of corrective measures. In such applications, it may be important that the caller's identity be subject to reliable verification. Other applications may present a critical need for positively verifiable identification to the extent that credit-card numbers and/or personal identification numbers may be employed.

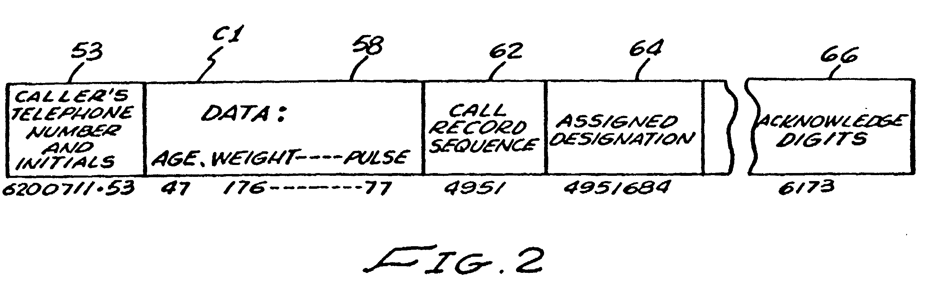

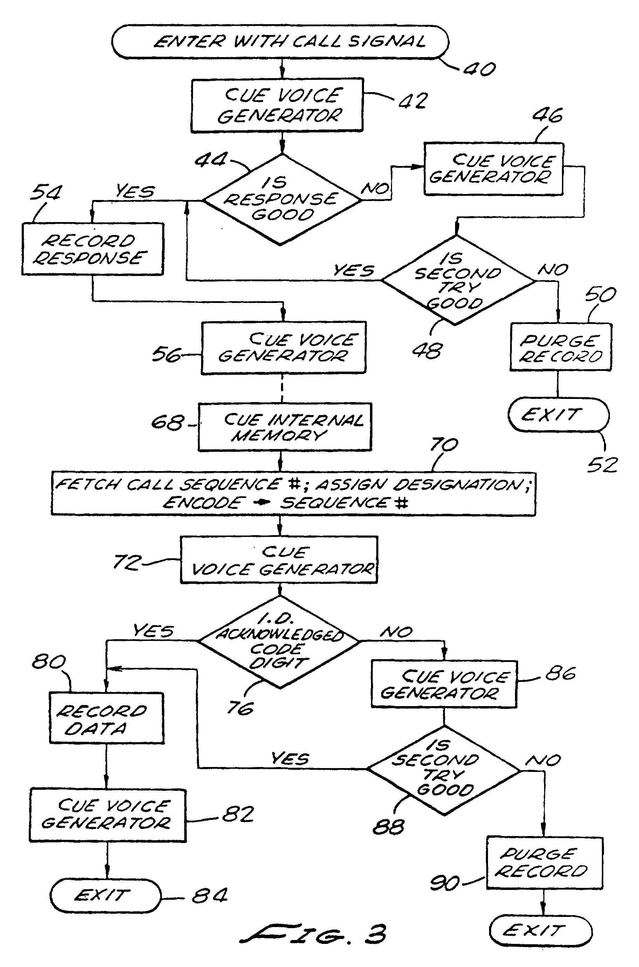

The exemplary operation, with regard to a specific caller, will now be treated referring somewhat concurrently to FIGURES 1, 2, and 3. As indicated above, FIGURE 2 indicates a data storage format and will now be considered with regard to a format in which data is composed in one of the cells C1-Cn of the memory 32. Pursuing the above example in accordance with the assumptions, further assume the existence of a caller at the remote terminal T1 who wishes to pursue health-related information on the basis of statistical analysis. The caller lifts the hand piece 10 and in accordance with conventional techniques actuates the push buttons 14 to establish communication through the facility C with the central station D. Upon receiving the call signal, the interface unit 20 (central station D, FIGURE 1) actuates the computer 22 to cue the voice generator 30. The sequence of operations is represented to be initiated in FIGURE 3 by the "enter" block 40 which is accordingly followed by a "cue voice generator" command block 42. Accordingly, the voice generator 30 (FIGURE 1) formulates speech, a representative form of which might be: "Thank you for participating in the coronary artery disease statistical analysis. Please give us your telephone number by actuating the call buttons on you telephone instrument."

Acting on the instructions, the caller would push the buttons 14 in sequence to indicate his telephone number, i.e. "6200711". The resulting telephone number signals are communicated to the interface unit 20 (FIGURE 1) then applied to the computer 22 for testing as a valid telephone number. The test is indicated by the block 44 (FIGURE 3). If the response is not valid, for example contains an inappropriate number of digits, the operation of block 46 is initiated again cuing the voice generator 30 (FIGURE 1). Accordingly, the voice generator reinstructs the caller, e.g.: "You have not entered a proper telephone number. Please reenter your telephone number by pressing the appropriate call buttons."

The caller is then allotted a predetermined period of time to make a proper entry with the consequence that the system moves to a test operation as indicated by the block 48 (FIGURE 3). Specifically, block 48 poses the query: "Is the second try good?"

If the caller is again unsuccessful, the system purges the record as indicated by the block 50 and the call is terminated as indicated by the block 52. Conversely, if the caller responds with a proper telephone number, the operation sequences to record the response as indicated by the block 54. That is, the caller's telephone is recorded in a specific cell C1-Cn identified with the caller. The format of the cell C1 is indicated in FIGURE 2. The first portion, section 53, contains the caller's telephone number, i.e. "6200711". It is to be noted that, as explained above, if the second attempt to formulate a proper number is successful, as manifest by the block 48 (FIGURE 3), the response is recorded at that stage. In either case, exiting from the block 54 (FIGURE 3) invokes the next operation of again cuing the voice generator as indicated by the block 56.

As an alternative, if a selective-group polling operation is performed, as mentioned above, the caller is qualified by providing the "one-time" key number included in his package. As indicated above, the unit 23 may incorporate a look-up table for proper key numbers. Proper numbers may be coded using any of a wide variety of techniques. As a simple illustrative example, the key may comprise a precise number of digits that always total a particular numerical value.

The key test unit 23 performs the test as an initial qualification. Next, the unit 23 verifies that the key given by a caller has not been consumed by prior use. Thus, the unit 23 may simply incorporate some arithmetic test capability along with a look-up table as well known in the art.

Returning to the detailed example, the process proceeds after the caller is qualified. Specifically, the cue to the voice generator 30 (FIGURE 1) as represented by the block 56 produces a request for further information from the caller. For example, the voice generator might request information by stating: "Please use the telephone buttons to indicate the initials of your first and last names using the asterisk button for the letters Q and Z."

The detailed operation is not represented in FIGURE 3 as it is similar to the operation illustrated by the blocks 42 through 54. However, again, a proper response is registered in the storage cell C1 as illustrated in FIGURE 2 by the number "53" also registered in the first section 53 of the cell.

The cycle of obtaining digital information from the caller next is repeated with respect to substantial specific health data. For example, as illustrated in FIGURE 2, the next section 58 in the cell C1 receives an accumulation of health data, including the caller's age, weight, pulse rate, and so on. Representative digital numbers are illustrated in FIGURE 2.

During the course of telephonic communication, the computer 22 formulates identification data for the caller specifically including: the chronological sequence of the call, the assigned designation of the call, and a set of acknowledgment digits for the call. Such data identification is registered in the assigned cell C1 in accordance with the formate of FIGURE 2 being stored in sections 62, 64, and 66.

It is to be noted that the data may be stored in a coded interrelationship. For example, the acknowledgement digits may be related to the call record sequence. In the illustrative example, the chronological order number of the caller is 4951. The acknowledge digits may be derived from that sequence number. For example, as illustrated, a coded relationship may be established by adding "two" to each of the individual record sequence digits. Considering the example numerically:

| | |
|---|---|
| | 4951 |
| | 2222 |
| Adding without carries | 6173 |

According to the example, the call chronological sequence registered for the caller is 4951 as represented in the section 62 while the acknowledge digits are 6173 as registered in the section 66. Additionally, the computer develops an assigned designation number, e.g. designation "4951684", which is registered in the section 64 and an acknowledge code or digits, e. g. 6173, registered in the section 66. These values are formulated in accordance with conventional number techniques during the data acquisition phase. Specifically, with the exemplary numerals formulated, the operation proceeds.

The computer 22 (FIGURE 1) cues the internal memory.

That operation is indicated by the block 68 (FIGURE 3). Thus, the computer 22 fetches the call record sequence number, assigns a designation (if not previously assigned), and encodes the sequence number as the acknowledgement digits (if not previously accomplished). These operations are indicated by the block 70 (FIGURE 3). Next, the computer 22 (FIGURE 1) cues the voice generator as indicated by the block 72 (FIGURE 3) to provide information to the caller. Specifically, for example, the voice generator 30 (FIGURE 1) might state:

"This transaction has been designated by the number 4951684, and is further identified by the acknowledgement digits 6173. Please make a record of these numbers as they will be repeated. Specifically, the designation number is 4951684. The acknowledgement digits are 6173. Please acknowledge this transaction by pressing your telephone buttons to indicate the acknowledge digits 6173."

The system then assumes a test mode as indicated by the block 76 (FIGURE 3). If the caller provides the correct acknowledgment digits, the data is confirmed in the record as indicated by the block 80 and registered in the cell C1 (FIGURE 2). Additionally, the voice generator 30 (FIGURE 1) is sequenced as indicated by the block 82 (FIGURE 3) to indicate the close of the communication and that the transaction is terminated as represented by the exit block 84.

In the event that the caller cannot confirm his acknowledgment digits, as indicated by the block 76, a repeat operation is performed as indicated respectively by the blocks 86 and 88. Specifically, the voice generator 30 (FIGURE 1) is cued for a second instructional message. In the event that the second attempt also fails, the data is purged and the call discounted as indicated by block 90. If the second try is successful (test block 88), as indicated by the block 80, the record is perfected as indicated above.

As a result of the likelihood of a large number of calls, as described above, the data cells C1-Cn in the memory 32 (FIGURE 1) are developed with specific information indicative of a statistical sampling of the populace of concern. The data of that statistical sampling may be self-generating of specific conclusions with respect to a subset of individuals, and/or supplemental data may clearly manifest a significant subset. For example, the data may indicate a significant departure from an assumed normal characteristic. Such data, accumulated from the polling, may be considered by logic comparisons in the computer 22 to select the subset of persons who should be isolated.

In addition to the self-generating conclusions available from the received data, the system may involve the introduction of external data. In the physical fitness example, such external data might take the form of national statistical data. In any event, the processing operation usually involves comparison testing which compares caller data from individual cells C1-Cn with test data that is supplied to the statistical analysis program means 28 through the command terminal 34.

As a simple example, health data including age, weight, pulse etc, may be formulated into a composite number reflecting rated values for each of the data elements. Such a composite number may then be placed in the data test buffer 26 for sequential testing against similarly composed numbers formed from the data in the individual cells C1-Cn. Based on such comparative testing, a subset of persons may be identified. Presumably those persons should be informed of their circumstances. However, it is important that identifications be confirmed as accurate. It is in that sense that the assigned designations as registered in the section 64 (FIGURE 2) and the call record sequence, as registered in the block 62, are important. Multiple comparative processing operations may be desirable or necessary to isolate and confirm a subset of significant concern.

In the above example, members of the public were simply invited to use the service. A number of alternatives exist which might well impact on the statistical analysis. For example, callers might be restricted to the purchasers of a specific product as a medical apparatus for measuring blood pressures, heart rates, or so on. In such situations, it will be apparent that the statistical data will be somewhat distorted from an average or normal sampling. Clearly, the computer 22 can be programmed to take into account such considerations.

In that regard, the computer 22 might also verify identification data proffered by a caller. Such data might take the form of a credit-card number or a personal identification number. Various techniques for verification of such numbers using computer techniques are well known and recognized in the prior art. In any event, a wide variety of possibilities, applications, and formats in accordance herewith will be apparent to those skilled in the art wherein data is assembled, stored, identified, processed by testing to isolate a subset or manifest data with sources reliably confirmed. For example, merchandising, polling, selecting, and related operations are practical.

In view of the above explanation of the exemplary system, it will be appreciated that embodiments of the present invention may be employed in many applications to accumulate statistical data, process such data, and define subsets of callers of concern. While certain exemplary operations have been stated herein, and certain detailed structures have been disclosed, the appropriate scope hereof is deemed to be in accordance with the claims as set forth below.

**Claims**

1. A method of operations for a data station (D) to which callers from individual terminals (T1-Tn) are interfaced via a telephone system (C), in which generated voice messages are transmitted to the calling terminals (T1-Tn) via the telephone system (C) prompting the respective callers to transmit signal data to the data station (D) via the telephone system (C), and the signal data transmitted in response to the prompting is received by the data station (D) for use in execution of said operations, **characterised in that** for at least some of the calls this signal data includes a key number which is provided with a product acquired earlier by the caller, and that the data station (D) verifies that this key number has not been consumed by prior use, thereby qualifying the caller to access certain operations of the data station (D) during the respective call and wherein the data station (D) uses the callers telephone number for caller-identification.

2. A method according to claim 1 wherein the key number is tested to confirm that it is of a proper form.

3. A method according to claim 2 wherein the key number is verified by its coding.

4. A method according to any of claims 1 to 3 wherein verification that the key number has not been consumed involves a look-up table.

5. A method according to claim 4 wherein key numbers are check-ked off against the look-up table as they are consumed by use.

6. A method according to any one of claims 1 to 5 wherein data for identification of the caller is accumulated at the data station (D).

7. A method according to claim 1 wherein the caller is prompted by voice message to transmit the caller's telephone number to the data station (D).

8. A method according to claim 1 or claim 7 wherein the caller's telephone number is tested for validity at the data station (D).

9. A method according to any one of claims 1 to 8 wherein the data station (D) stores some of the data which is transmitted to it via the telephone system (C) as a result of the call.

10. A method according to claim 9 wherein following the storage of data of the call, a generated voice message is provided to the caller via the telephone system (C) giving information to the caller.

11. A method according to any one of claims 1 to 10 wherein the product is acquired by purchase.

12. A method for controlling operations of an interface with a telephone communication system, the process comprising the steps of: providing products carrying entitlement numbers specifying limits on use to entitle individual callers to access the operations of the interface with the telephone communication system; coupling remote terminals to the interface for providing voice signals to the individual callers and generating the voice signals for actuating the remote terminals as to provide vocal operating instructions to specific ones of the individual callers; receiving digital identification data from the individual callers responsive to the voice signals including the entitlement numbers for the individual callers and answer data provided from the remote terminals under control of the individual callers; qualifying the individual callers by testing to determine if the individual callers are entitled to access the operations of the interface based on the limits on use specified by the entitlement numbers for the individual callers and accordingly providing approval signals for qualified individual callers; accessing a memory with the entitlement numbers for the individual callers and storing data relating to calls from individual callers; and processing at least certain of the answer data in response to the approval signals.

13. A method according to claim 12 wherein the step of receiving answer data further includes receiving caller credit-card number data as digital answer data.

14. A method according to claim 12 or claim 13 wherein the step of qualifying the individual callers further includes verifying credit-card numbers.

15. A method according to claim 14 wherein the credit-card numbers are verified while in communication with the individual callers.

16. A method according to any one of claims 12 to 15 wherein the step of providing the products includes providing the products for purchase.

17. A method according to any one of claims 12 to 16 wherein the entitlement numbers include caller personal-identification data.

18. A method according to any of claims 12 to 17 wherein the limits on use specify limited numbers of uses.

19. A method according to any one of claims 12 to 18 wherein the entitlement numbers are coded for verification.

20. A method according to any one of claims 12 to 19 wherein the entitlement numbers are included in packaging of products.

21. A method according to any one of claims 12 to 20 including the step of providing computer-formulated numbers to the individual callers.

22. A method according to claim 21 wherein the computer-formulated numbers are indicative of sequence data.

23. A method according to claim 22 wherein the sequence data includes call record sequence data.

24. A method according to any one of claims 21 to 23 wherein the computer-formulated numbers are stored in the memory.

25. A method according to any one of claims 12 to 24 wherein the processing step processes certain of the answer data to isolate a subset of the individual callers.

26. A system for controlling operations of a data station (D) to which callers from individual terminals (T1-Tn) are interfaced via a telephone system (C), in which generated voice messages are transmitted to the calling terminals (T1-Tn) via the telephone system (C) prompting the respective callers to transmit signal data to the data station (D) via the telephone system (C), and the signal data transmitted in response to the prompting is received by the data station (D) for use in execution of said operations, **characterised in that** for at least some of the calls this signal data includes a key number which is provided with a product acquired earlier by the caller, and that the data station (D) is adapted to verify that this key number has not been consumed by prior use, thereby qualifying the caller to access certain operations of the data station (D) during the respective call and wherein the data station (D) is adapted to use the callers telephone number for caller-identification.

27. A system according to claim 26 wherein the key number is tested to confirm that it is of a proper form.

28. A system according to claim 27 wherein the key number is verified by its coding.

29. A system according to any of claims 26 to 28 wherein verification that the key number has not been consumed involves a look-up table.

30. A system according to claim 29 wherein key numbers are checked off against the look-up table as they are consumed by use.

31. A system according to any one of claims 26 to 28 wherein data for identification of the caller is accumulated at the data station (D).

32. A system according to claim 26 wherein the caller is prompted by voice message to transmit the caller's telephone number to the data station (D).

33. A system, according to claim 26 or claim 32 wherein the caller's telephone number is tested for validity at the data station (D).

**34.** A system according to any one of claims 26 to 33 wherein the data station (D) stores some of the data which is transmitted to it via the telephone system (C) as a result of the call.

**35.** A system according to claim 34 wherein following the storage of data of the call, a generated voice message is provided to the caller via the telephone system (C) giving information to the caller.

**36.** A system according to any one of claims 26 to 35 wherein the product is acquired by purchase.

**37.** A system for controlling operations of an interface with a telephone communication system, the system comprising: means for providing products carrying entitlement numbers specifying limits on use to entitle individual callers to access the operations of the interface with the telephone communication system; means for coupling remote terminals to the interface for providing voice signals to the individual callers and generating the voice signals for actuating the remote terminals as to provide vocal operating instructions to specific ones of the individual callers; means for receiving digital identification data from the individual callers responsive to the voice signals including the entitlement numbers for the individual callers and answer data provided from the remote terminals under control of the individual callers; means for qualifying the individual callers by testing to determine if the individual callers are entitled to access the operations of the interface based on the limits on use specified by the entitlement numbers for the individual callers and accordingly providing approval signals for qualified individual callers; a memory with the entitlement numbers for the individual callers in which data relating to calls from individual callers are stored; and means for processing at least certain of the answer data in response to the approval signals.

**38.** A system according to claim 37 wherein the means for receiving answer data further includes means for receiving caller credit-card number data as digital answer data.

**39.** A system according to claim 37 or claim 38 wherein the means for qualifying the individual callers further includes means for verifying credit-card numbers.

**40.** A system according to claim 39 wherein the credit-card numbers are verified while the system is in communication with the individual callers.

**41.** A system according to any one of claims 37 to 40 wherein the means for providing the products includes means for providing the products for purchase.

**42.** A system according to any one of claims 37 to 41 wherein the entitlement numbers include caller personal-identification data.

**43.** A system according to any one of claims 37 to 42 wherein the limits on use specify limited numbers of uses.

**44.** A system according to any one of claims 37 to 43 wherein the entitlement numbers are coded for verification.

**45.** A system according to any one of claims 37 to 44 wherein the entitlement numbers are included in packaging of products.

**46.** A system according to any one of claims 37 to 45 including the means for providing computer-formulated numbers to the individual callers.

**47.** A system according to claim 46 wherein the computer-formulated numbers are indicative of sequence data.

**48.** A system according to claim 47 wherein the sequence data includes call record sequence data.

**49.** A system according to any one of claims 46 to 48 wherein the computer-formulated numbers are stored in the memory.

**50.** A system according to any one of claims 37 to 49 wherein the processing means processes certain of the answer data to isolate a subset of the individual callers.

**Patentansprüche**

**1.** Operationsverfahren für eine Datenstation (D), mit der über ein Telefonsystem (C) Anrufer von individuellen Endgeräten (T1-Tn) verbunden werden, wobei generierte Sprachnachrichten über das Telefonsystem (C) an die aufrufenden Endgeräte (T1-Tn) übertragen werden, welche die betreffenden Anrufer auffordern, Signaldaten über das Telefonsystem (C) an die Datenstation (D) zu senden, und die als Antwort auf die Aufforderung gesendeten Signaldaten von der Datenstation (D) zur Ausführung der Operationen empfangen werden, **dadurch gekennzeichnet, daß** für zumindest einige der Anrufe diese Signaldaten eine Schlüsselzahl enthalten, die in Verbindung mit einem früher von dem Anrufer erworbenen Produkt vorgesehen ist, und daß die Datenstation (D) verifiziert, daß diese Schlüsselzahl nicht durch früheren Gebrauch aufgebraucht ist, um dadurch den Anrufer für den Zugang zu gewissen Operationen der Datenstation (D) während des betreffenden Anrufs zu qualifizieren, und wobei die Datenstation (D) die Telefonnummer der Anrufer zur Anrufer-Identifizierung verwendet.

2. Verfahren nach Anspruch 1, bei dem die Schlüsselzahl geprüft wird, um zu bestätigen, daß sie eine korrekte Form besitzt.

3. Verfahren nach Anspruch 2, bei dem die Schlüsselzahl durch ihre Kodierung verifiziert wird.

4. Verfahren nach einem der Ansprüche 1 bis 3, bei dem die Verifizierung, daß die Schlüsselzahl nicht verbraucht ist, eine Nachschlagetabelle beinhaltet.

5. Verfahren nach Anspruch 4, bei dem Schlüsselzahlen mit der Nachschlagetabelle abgeglichen werden, wenn sie durch Benutzung verbraucht werden.

6. Verfahren nach einem der Ansprüche 1 bis 5, bei dem Daten zum Identifizieren des Anrufers in der Datenstation (D) gesammelt werden.

7. Verfahren nach Anspruch 1, bei dem der Anrufer durch Sprachnachricht aufgefordert wird, die Telefonnummer des Anrufers an die Datenstation (D) zu senden.

8. Verfahren nach Anspruch 1 oder Anspruch 7, bei dem die Telefonnummer des Anrufers in der Datenstation (D) auf Gültigkeit geprüft wird.

9. Verfahren nach einem der Ansprüche 1 bis 8, bei dem die Datenstation (D) einige der Daten, die ihr über das Telefonsystem (C) als Ergebnis des Anrufs zugesandt wurden, abspeichert.

10. Verfahren nach Anspruch 9, bei dem im Anschluß an die Speicherung von Daten des Anrufs eine erzeugte Sprachnachricht über das Telefonsystem (C) an den Anrufer geleitet wird, die dem Anrufer Information gibt.

11. Verfahren nach einem der Ansprüche 1 bis 10, bei dem das Produkt durch Kaufen erworben wird.

12. Verfahren zum Steuern von Operationen einer Schnittstelle eines Telefon-Kommunikationssystems, umfassend die Schritte:

Bereitstellen von Produkten, die Berechtigungsnummern tragen, welche Grenzen für den Gebrauch spezifizieren, um individuelle Anrufer für den Zugang zu den Operationen der Schnittstelle mit dem Telefon-Kommunikationssystem zu berechtigen; Verbinden von abgesetzten Endgeräten mit der Schnittstelle, um Sprachsignale für die einzelnen Anrufer bereitzustellen und die Sprachsignale zum Betätigen der abgesetzten Endgeräte zu erzeugen, um so spezifischen Anrufern der individuellen Anrufer sprachliche Operationsinstruktionen zu geben; Empfangen digitaler Identifikationsdaten von den individuellen Anrufern ansprechend auf die Sprachsignale, einschließlich der Berechtigungsnummern für die individuellen Anrufer, sowie Antwortdaten, die von den abgesetzten Endgeräten unter der Steuerung der individuellen Anrufer geliefert werden; Qualifizieren der individuellen Anrufer durch Prüfen, ob die individuellen Anrufer berechtigt sind für den Zugang zu den Operationen der Schnittstelle, basierend auf den Benutzungs-Beschränkungen, die durch die Berechtigungsnummern für die individuellen Anrufer festgelegt sind, und dementsprechend Bereitstellen von Genehmigungssignalen für qualifizierte individuelle Anrufer; Zugreifen auf einen Speicher mit den Berechtigungsnummern für die individuellen Anrufer und Speichern von Daten bezüglich Anrufen von individuellen Anrufern; und Verarbeiten von zumindest gewissen Antwortdaten in Abhängigkeit der Genehmigungssignale.

13. Verfahren nach Anspruch 12, bei dem der Schritt des Empfangens von Antwortdaten weiterhin das Empfangen von Kreditkartennummern-Daten des Anrufers als digitale Antwortdaten beinhaltet.

14. Verfahren nach Anspruch 12 oder Anspruch 13, bei dem der Schritt des Qualifizierens der individuellen Anrufer außerdem das Verifizieren von Kreditkartennummern beinhaltet.

15. Verfahren nach Anspruch 14, bei dem die Kreditkartennummern verifiziert werden, während die Kommunikation mit den individuellen Anrufern im Gange ist.

16. Verfahren nach einem der Ansprüche 12 bis 15, bei dem der Schritt des Bereitstellens der Produkte die Bereitstellung der Produkte für den Kauf beinhaltet.

17. Verfahren nach einem der Ansprüche 12 bis 16, bei dem die Berechtigungsnummern persönliche Identifikationsdaten des Anrufers beinhalten.

18. Verfahren nach einem der Ansprüche 12 bis 17, bei dem die Benutzungsbeschränkungen begrenzte Benutzungshäufigkeiten spezifizieren.

19. Verfahren nach einem der Ansprüche 12 bis 18, bei dem die Berechtigungsnummern zur Verifizierung kodiert werden.

20. Verfahren nach einem der Ansprüche 12 bis 19, bei dem die Berechtigungsnummern in Produktverpackungen enthalten sind.

21. Verfahren nach einem der Ansprüche 12 bis 20, beinhaltend den Schritt der Ausgabe von mittels Computer formulierten Nummern an die individuellen Anrufer.

22. Verfahren nach Anspruch 21, bei dem die von einem Computer formulierten Nummern kennzeichnend für Abfolgedaten sind.

23. Verfahren nach Anspruch 22, bei dem die Abfolgedaten Anruf-Aufzeichnungs-Folgedaten beinhalten.

24. Verfahren nach einem der Ansprüche 21 bis 23, bei dem die von einem Computer formulierten Nummern in dem Speicher abgespeichert werden.

25. Verfahren nach einem der Ansprüche 12 bis 24, bei dem der Verarbeitungsschritt gewisse Antwortdaten verarbeitet, um eine Untermenge der individuellen Anrufer zu separieren.

26. System zum Steuern von Operationen einer Datenstation (D), mit der Anrufer von individuellen Endgeräten (T1-Tn) über ein Telefonsystem (C) verbunden werden, in welchem Sprachnachrichten an die anrufenden Endgeräte (T1-Tn) über das Telefonsystem (C) übertragen werden, welche die jeweiligen Anrufer auffordern, Daten über das Telefonsystem (C) an die Datenstation (D) zu senden, und die als Antwort auf die Aufforderung gesendeten Signaldaten von der Datenstation (D) empfangen werden zur Verwendung bei der Ausführung der Operationen, **dadurch gekennzeichnet, daß** für zumindest einige der Anrufe diese Signaldaten eine Schlüsselzahl beinhalten, die in Verbindung mit einem früher von dem Anrufer erworbenen Produkt vorgesehen ist, und daß die Datenstation (D) dazu ausgebildet ist, zu verifizieren, daß diese Schlüsselnummer nicht durch frühere Benutzung verbraucht ist, um dadurch den Anrufer für den Zugang zu gewissen Operationen der Datenstation (D) während des betreffenden Anrufs zu qualifizieren, und wobei die Datenstation (D) dazu ausgebildet ist, die Telefonnummer des Anrufers zur Anrufer-Identifikation zu verwenden.

27. System nach Anspruch 26, bei dem die Schlüsselzahl geprüft wird, um zu bestätigen, daß sie eine korrekte Form besitzt.

28. System nach Anspruch 27, bei dem die Schlüsselzahl durch ihre Kodierung verifiziert wird.

29. System nach einem der Ansprüche 26 bis 28, bei dem die Verifizierung, daß die Schlüsselzahl nicht verbraucht ist, eine Nachschlagetabelle beinhaltet.

30. System nach Anspruch 29, bei dem Schlüsselzahlen mit der Nachschlagetabelle abgeglichen werden, wenn sie durch Benutzung verbraucht werden.

31. System nach einem der Ansprüche 26 bis 28, bei dem Daten zum Identifizieren des Anrufers in der Datenstation (D) gesammelt werden.

32. System nach Anspruch 26, bei dem der Anrufer durch Sprachnachricht aufgefordert wird, die Telefonnummer des Anrufers an die Datenstation (D) zu senden.

33. System nach Anspruch 26 oder Anspruch 32, bei dem die Telefonnummer des Anrufers in der Datenstation (D) auf Gültigkeit geprüft wird.

34. System nach einem der Ansprüche 26 bis 33, bei dem die Datenstation (D) einige der Daten, die ihr über das Telefonsystem (C) als Ergebnis des Anrufs zugesandt wurden, abspeichert.

35. System nach Anspruch 34, bei dem im Anschluß an die Speicherung von Daten des Anrufs eine erzeugte Sprachnachricht über das Telefonsystem (C) an den Anrufer geleitet wird, die dem Anrufer Information gibt.

36. System nach einem der Ansprüche 26 bis 35, bei dem das Produkt durch Kaufen erworben wird.

37. System zum Steuern von Operationen einer Schnittstelle eines Telefon-Kommunikationssystems, welches umfaßt:

eine Einrichtung zum Bereitstellen von Produkten, die Berechtigungsnummern tragen, welche Benutzungsbeschränkungen spezifizieren, um individuelle Anrufer für den Zugang zu den Operationen der Schnittstelle mit dem Telefon-Kommunikationssystem zu berechtigen; eine Einrichtung zum Verbinden von abgesetzten Endgeräten mit der Schnittstelle zur Bereitstellung von Sprachsignalen für die individuellen Anrufer und zum Erzeugen der Sprachsignale, um die abgesetzten Endgeräte zu betätigen und so sprachliche Operationsbefehle an spezifische individuelle Anrufer zu geben; eine Einrichtung zum Empfangen digitaler Identifikationsdaten von den individuellen Anrufern ansprechend auf die Sprachsignale, einschließlich der Berechtigungsnummern für die individuellen Anrufer, sowie Antwortdaten, die von den abgesetzten Endgeräten unter der Steuerung durch die individuellen Anrufer bereitgestellt werden; eine Einrichtung zum Qualifizieren der individuellen Anrufer durch Prüfung, um festzustellen, ob die individuellen Anrufer berechtigt sind für den Zugang zu den Operationen der Schnittstelle, basierend auf den Benutzungs-Beschränkungen, die durch die Berechtigungsnummern für die individuellen Anrufer spezifiziert sind, und dementsprechendes Erzeugen von Genehmigungssignalen für qualifizierte individuelle Anrufer; einen Speicher mit den Berechtigungsnummern für die individuellen Anrufer, in welchem Daten über Anrufe von individuellen Anrufern gespeichert werden; und eine Einrichtung zum Verarbeiten von zumindest einigen der Antwortdaten ansprechend auf die Genehmigungssignale.

38. System nach Anspruch 37, bei dem die Einrichtung zum Empfangen von Antwortdaten außerdem eine Einrichtung zum Empfangen von Kreditkartennummern-Daten des Anrufers als digitale Antwortdaten beinhaltet.

39. System nach Anspruch 37 oder Anspruch 38, bei dem die Einrichtung zum Qualifizieren individueller Anrufer außerdem eine Einrichtung zum Verifizieren von Kreditkartennummern enthält.

40. System nach Anspruch 39, bei dem die Kreditkartennummern verifiziert werden, während das System mit den individuellen Anrufern kommuniziert.

41. System nach einem der Ansprüche 37 bis 40, bei dem die Einrichtung zur Bereitstellung der Produkte eine Einrichtung zum Bereitstellen der Produkte für den Kauf beinhaltet.

42. System nach einem der Ansprüche 37 bis 41, bei dem die Berechtigungsnummern persönliche Identifikationsdaten des Anrufers enthalten.

43. System nach einem der Ansprüche 37 bis 42, bei dem die Benutzungsbeschränkungen begrenzte Benutzungshäufigkeiten spezifizieren.

44. System nach einem der Ansprüche 37 bis 43, bei dem die Berechtigungsnummern zwecks Verifizierung kodiert werden.

45. System nach einem der Ansprüche 37 bis 44, bei dem die Berechtigungsnummern in Produktverpackungen enthalten sind.

46. System nach einem der Ansprüche 37 bis 45, mit einer Einrichtung zum Bereitstellen von durch einen Computer formulierten Nummern für die individuellen Anrufer.

47. System nach Anspruch 46, bei dem die vom Computer formulierten Nummern kennzeichnend für Abfolgedaten sind.

48. System nach Anspruch 47, bei dem die Abfolgedaten Anruf-Aufzeichnungs-Folgedaten enthalten.

49. System nach einem der Ansprüche 46 bis 48, bei dem die vom Computer formulierten Nummern in dem Speicher abgespeichert sind.

50. System nach einem der Ansprüche 47 bis 49, bei dem die Verarbeitungseinrichtung gewisse Antwortdaten verarbeitet, um eine Untermenge individueller Anrufer zu separieren.

**Revendications**

1. Procédé d'opérations d'un poste de données (D) auquel des appelants à partir de terminaux individuels (T1 à Tn) sont interfacés via un système téléphonique (C), dans lequel des messages vocaux produits sont transmis aux terminaux appelants (T1 à Tn) via le système téléphonique (C) invitant les appelants respectifs à transmettre des données de signaux au poste de données (D) via le système téléphonique (C), et les données de signaux transmises en réponse à l'invite sont reçues par le poste de données (D) pour être utilisées dans l'exécution desdites opérations, **caractérisé en ce que** pour au moins certains des appels, ces données de signaux comportent un nombre clé qui est fourni avec un produit acquis précédemment par l'appelant, et **en ce que** le poste de données (D) vérifie que ce nombre clé n'a pas été consommé par une utilisation antérieure, qualifiant l'appelant pour qu'il ait accès à certaines opérations du poste de données (D) pendant l'appel respectif et dans lequel le poste de données (D) utilise le numéro de téléphone de l'appelant pour une identification de l'appelant.

2. Procédé selon la revendication 1, dans lequel le nombre clé est testé pour confirmer qu'il a une forme correcte.

3. Procédé selon la revendication 2, dans lequel le nombre clé est vérifié par son codage.

4. Procédé selon l'une quelconque des revendications 1 à 3, dans lequel la vérification que le nombre clé n'a pas été consommé implique une table de consultation.

**5.** Procédé selon la revendication 4, dans lequel les nombres clé sont contrôlés vis-à-vis de la table de consultation lorsqu'ils sont consommés par utilisation.

**6.** Procédé selon l'une quelconque des revendications 1 à 5, dans lequel les données d'identification de l'appelant sont accumulées au poste de données (D).

**7.** Procédé selon la revendication 1, dans lequel l'appelant est invité par un message vocal à transmettre le numéro de téléphone de l'appelant au poste de données (D).

**8.** Procédé selon la revendication 1 ou 7, dans lequel le numéro de téléphone de l'appelant est testé en ce qui concerne la validité au niveau du poste de données (D).

**9.** Procédé selon l'une quelconque des revendications 1 à 8, dans lequel le poste de données (D) mémorise certaines des données qui sont transmises à celui-ci via le système téléphonique (C) en résultat de l'appel.

**10.** Procédé selon la revendication 9, dans lequel après la mémorisation des données de l'appel, un message vocal généré est fourni à l'appelant via le système téléphonique (C) donnant des informations à l'appelant.

**11.** Procédé selon l'une quelconque des revendications 1 à 10, dans lequel le produit est acquis par achat.

**12.** Procédé pour commander des opérations d'interface avec un système de communication téléphonique, le processus comportant les étapes consistant à : fournir des produits portant des numéros d'autorisation spécifiant des limites d'utilisation pour autoriser des appelants individuels à avoir accès aux opérations de l'interface avec le système de communication téléphonique, relier des terminaux éloignés à l'interface pour fournir des signaux vocaux aux appelants individuels et produire les signaux vocaux pour actionner les terminaux éloignés de manière à fournir des instructions d'actionnement vocales à des appelants spécifiques parmi les appelants individuels, recevoir des données d'identification numériques à partir des réponses d'appelants individuels aux signaux vocaux incluant les numéros d'autorisation pour les appelants individuels et des données de réponse fournies à partir des terminaux éloignés sous la commande des appelants individuels, qualifier les appelants individuels par un test destiné à déterminer si les appelants individuels sont autorisés à avoir accès aux opérations de l'interface sur la base des limites d'utilisation spécifiées par les numéros d'autorisation des appelants individuels et en conséquence fournir des signaux d'approbation pour des appelants individuels qualifiés, avoir accès à une mémoire ayant les numéros d'autorisation des appelants individuels et mémoriser des données concernant les appels en provenance des appelants individuels, et traiter au moins certaines des données de réponse en réponse aux signaux d'approbation.

**13.** Procédé selon la revendication 12, dans lequel l'étape consistant à recevoir des données de réponse comporte en outre la réception de données de numéro de carte de crédit d'appelant en tant que données de réponse numériques.

**14.** Procédé selon la revendication 12 ou 13, dans lequel l'étape consistant à qualifier les appelants individuels comporte en outre la vérification des numéros de carte de crédit.

**15.** Procédé selon la revendication 14, dans lequel les numéros de carte de crédit sont vérifiés alors qu'on est en communication avec les appelants individuels.

**16.** Procédé selon l'une quelconque des revendications 12 à 15, dans lequel l'étape consistant à fournir les produits comporte la fourniture des produits pour achat.

**17.** Procédé selon l'une quelconque des revendications 12 à 16, dans lequel les numéros d'autorisation incluent des données d'identification personnelles d'appelants.

**18.** Procédé selon l'une quelconque des revendications 12 à 17, dans lequel les limites d'utilisation spécifient des nombres d'utilisation limités.

**19.** Procédé selon l'une quelconque des revendications 12 à 18, dans lequel les numéros d'autorisation sont codés pour vérification.

**20.** Procédé selon l'une quelconque des revendications 12 à 19, dans lequel les numéros d'autorisation sont inclus dans un emballage de produit.

**21.** Procédé selon l'une quelconque des revendications 12 à 20, incluant. l'étape consistant à fournir des nombres formulés par ordinateur aux appelants individuels.

**22.** Procédé selon la revendication 21, dans lequel les nombres formulés par ordinateur sont représentatifs de données de séquence.

**23.** Procédé selon la revendication 22, dans lequel les données de séquence incluent des données de séquence d'enregistrement d'appel.

24. Procédé selon l'une quelconque des revendications 21 à 23, dans lequel les nombres formulés par ordinateur sont mémorisés dans la mémoire.

25. Procédé selon l'une quelconque des revendications 12 à 24, dans lequel l'étape de traitement traite certaines des données de réponse pour isoler un sous-ensemble d'appelants individuels.

26. Système pour commander des opérations d'un poste de données (D) auquel des appelants à partir de terminaux individuels (T1 à Tn) sont interfacés via un système téléphonique (C), dans lequel des messages vocaux produits sont transmis vers les terminaux appelants (T1 à Tn) via le système téléphonique (C) invitant les appelants respectifs à transmettre des données de signaux au poste de données (D) via le système téléphonique (C), et les données de signaux transmises en réponse à l'invite sont reçues par le poste de données (D) pour être utilisées dans l'exécution desdites opérations, **caractérisé en ce que** pour au moins certains des appels, ces données de signaux comportent un nombre clé qui est fourni avec un produit acquis précédemment par l'appelant, et **en ce que** le poste de données (D) est adapté pour vérifier que ce nombre clé n'a pas été consommé par une utilisation antérieure, qualifiant ainsi l'appelant pour qu'il ait accès à certaines opérations du poste de données (D) pendant l'appel respectif et dans lequel le poste de données (D) est adapté pour utiliser le numéro de téléphone de l'appelant pour une identification de l'appelant.

27. Système selon la revendication 26, dans lequel le nombre clé est testé pour confirmer qu'il a une forme correcte.

28. Système selon la revendication 27, dans lequel le nombre clé est vérifié par son codage.

29. Système selon l'une quelconque des revendications 26 à 28, dans lequel la vérification du fait que le nombre clé n'a pas été consommé implique une table de consultation.

30. Système selon la revendication 29, dans lequel les nombres clé sont contrôlés vis-à-vis de la table de consultation lorsqu'ils sont consommés par utilisation.

31. Système selon l'une quelconque des revendications 26 à 28, dans lequel les données d'identification de l'appelant sont accumulées au poste de données (D).

32. Système selon la revendication 26, dans lequel l'appelant est invité par un' message vocal à transmettre le numéro de téléphone de l'appelant au poste de données (D).

33. Système selon la revendication 26 ou 22, dans lequel le numéro de téléphone de l'appelant est testé en ce qui concerne la validité, au niveau du poste de données (D).

34. Système selon l'une quelconque des revendications 26 à 33, dans lequel le poste de données (D) mémorise certaines des données qui sont transmises à celui-ci via le système téléphonique (C) en résultat de l'appel.

35. Système selon la revendication 34, dans lequel après la mémorisation des données de l'appel, un message vocal généré est fourni à l'appelant via le système téléphonique (C), donnant des informations à l'appelant.

36. Système selon l'une quelconque des revendications 26 à 35, dans lequel le produit est acquis par achat.

37. Système pour commander des opérations d'une interface avec un système de communication téléphonique, le système comportant : des moyens pour fournir des produits portant des numéros d'autorisation spécifiant des limites d'utilisation pour autoriser des appelants individuels à avoir accès aux opérations de l'interface avec le système de communication téléphonique, des moyens pour relier des terminaux éloignés à l'interface pour fournir des signaux vocaux aux appelants individuels et produire les signaux vocaux pour actionner les terminaux éloignés de manière à fournir des instructions d'actionnement vocales à des appelants spécifiques des appelants individuels, des moyens pour recevoir des données d'identification numériques à partir d'appelants individuels en réponse aux signaux vocaux incluant les numéros d'autorisation des appelants individuels et des données de réponse fournies à partir des terminaux éloignés sous la commande des appelants individuels, des moyens pour qualifier les appelants individuels par test pour déterminer si les appelants individuels sont autorisés à avoir accès aux opérations de l'interface sur la base des limites d'utilisation spécifiées par les numéros d'autorisation des appelants individuels et en conséquence fournir des signaux d'approbation pour des appelants individuels qualifiés, une mémoire ayant les numéros d'autorisation des appelants individuels dans laquelle des données concernant les appels en provenance d'appelants individuels sont mémorisées, et des moyens pour traiter au moins certaines des données de réponse en réponse aux signaux d'approbation.

**38.** Système selon la revendication 37, dans lequel des moyens pour recevoir des données de réponse comportent en outre des moyens pour recevoir des données de numéro de carte de crédit d'appelant en tant que données de réponse numériques.

**39.** Système selon la revendication 37 ou 38, dans lequel des moyens pour qualifier des appelants individuels comportent en outre des moyens pour vérifier des numéros de carte de crédit.

**40.** Système selon la revendication 39, dans lequel les numéros de carte de crédit sont vérifiés alors que le système est en communication avec les appelants individuels.

**41.** Système selon l'une quelconque des revendications 37 à 40, dans lequel des moyens pour fournir les produits comportent des moyens pour fournir les produits pour achat.

**42.** Système selon l'une quelconque des revendications 37 à 41, dans lequel les numéros d'autorisation incluent des données d'identification personnelles d'appelants.

**43.** Système selon l'une quelconque des revendications 37 à 42, dans lequel les limites d'utilisation spécifient des nombres d'utilisation limités.

**44.** Système selon l'une quelconque des revendications 37 à 43, dans lequel les numéros d'autorisation sont codés pour vérification.

**45.** Système selon l'une quelconque des revendications 37 à 44, dans lequel les numéros d'autorisation sont inclus dans l'emballage de produit.

**46.** Système selon l'une quelconque des revendications 37 à 45, incluant des moyens pour fournir des nombres formulés par ordinateur aux appelants individuels.

**47.** Système selon la revendication 46, dans lequel les nombres formulés par ordinateur sont représentatifs de données de séquence.

**48.** Système selon la revendication 47, dans lequel les données de séquence incluent des données de séquence d'enregistrement d'appel.

**49.** Système selon l'une quelconque des revendications 46 à 48, dans lequel les nombres formulés par ordinateur sont mémorisés dans la mémoire.

**50.** Système selon l'une quelconque des revendications 37 à 49, dans lequel des moyens de traitement traitent certaines des données de réponse pour isoler un sous-ensemble d'appelants individuels.

REMOTE TERMINAL T1

CENTRAL STATION

14

10

20 INTERFACE UNIT (TONE DECODER AND SWITCHING)

34 COMMAND TERMINAL

D

| 1 | ABC 2 | DEF 3 |
| GHI 4 | JKL 5 | MNO 6 |
| PRS 7 | TUV 8 | WXY 9 |
| * | 0 | # |

23 KEY TEST UNIT

COMPU-TER

28 STATISTICAL ANALYSIS PROGRAM MEANS (COMPARATOR)

24 SEQUENCER AND ENCODER

DATA TEST BUFFER

26

22

C COMMUNICATION FACILITY

VOICE GENERATOR 30

12

32 MEMORY

CELL C1

CELL C2

CELL Cn

REMOTE TERMINAL T2

REMOTE TERMINAL Tn

FIG.1

FIG.2

EP 0 917 335 B1

*FIG. 3*